# EUROPEAN PATENT APPLICATION

(11) **EP 1 407 867 A2**
(43) Date of publication of application: **14.04.2004**
(21) Application number: 03006323.4
(22) Date of filing: 20.03.2003
(51) Int. Cl.: B29C 44/14, B29D 31/00

(54) **Seat and procedure for making seats with additional padding preapplied to the covering**

(30) Priority: 11.10.2002 IT PD20020262
(71) Applicant: SELLE SMP S.a.s. di Schiavon Martino & C., 35020 Casalserugo (IT)
(72) Inventor: Schiavon, Franco, 35020 Casalserugo (PD) (IT); Schiavon, Maurizio, 35020 Casalserugo (PD) (IT)
(74) Representative: Gustorf, Gerhard, Dipl.-Ing.

(57) **Abstract**

The invention is a new procedure for making seats with additional gel padding, which comprises a mould in two parts (S1, S2), a generically circular sealing frame (T) between the two parts of the mould, the insertion, on the lower female mould (S1), of the seat cover (C), provided with one or more additional gel paddings (G) already formed and set, the closure of said sealing frame (T), the extraction of the air, the application of the body (D) of the seat on the lower side of the upper male mould (S2), the injection of polyurethane foam on the cover (C), the closure of the upper male mould on the lower mould, the expansion of the polyurethane foam to form the seat cushion (I). The gel layer may be applied to one or both sides, it may have constant or variable thickness, it may be distributed on several different areas, on the edges, on the vertical side areas.

## Description

The invention concerns seats with padding and the procedure for making them.

Seats are known that are composed of a rigid or semi-rigid thermoformed body, onto which the seat cushion is directly made, with the covering composed of a flexible layer of leather or of plastic material.

These seats may be, for example, seats for bicycles or transport vehicles in general, they may be, for example, elements fixed to frames of wood, plastic or metal to make the seat part and/or the backrest of chairs or armchairs. The most comfortable seats also have additional padding on top, composed of a layer of gel.

The procedure for making seats with additional gel padding on top comprises the laying of the leather or plastic cover upside-down on the female mould (reproducing the inside-out shape of the padding), the extraction of the air between the mould and the cover until the latter adheres to the mould itself, the application of a quantity of gel compound in liquid or semi-fluid state on the cover inside the mould, the wait until this has partly solidified, the insertion of polyurethane foam inside the female mould, the closing of the upper male mould on the lower side of which the body of the seat is applied, so as to expand the polyurethane foam until the space between the gel padding and the body is filled to make the cushion of the seat.

The seats are currently made with special equipment in which a plurality of moulds, male and female, are applied to the perimeter of a generically circular, rotating structure. The rotation of said circular structure, or carousel, brings each mould to different stations in succession, in each one of which an individual stage of the process is carried out, for example the application of the cover, the insertion of the gel compound, the insertion of polyurethane foam, closure.

This procedure for making seats with additional padding presents a series of drawbacks and limits.

The additional gel padding can only be made on the lower side of the mould, that is, on the top part of the seat, but it is not possible to position it on different points of the seat, for example on the sides or at the front, because the gel compound slips and is deposited on the lower side of the mould, since the gel filling is in the fluid state, and it levels off automatically.

After inserting the gel compound inside the female mould, it is necessary to wait for an adequate lapse of time, until the gel has partly solidified, before the polyurethane foam can be inserted and expanded. This means that the carousel slows down, and consequently all the operations for making the seat, or, alternatively, that a larger carousel must be supplied, and/or the station for inserting the gel and the station for inserting the polyurethane foam must be set at a greater distance on the circumference of the rotating structure.

In any case the time necessary for the partial or complete drying of the gel slows down the production time of all the seats.

Moreover, expensive specific equipment is needed for the instantaneous production of gel, as well as expensive specific equipment for conditioning the environment in which the gel padding is made (dehumidifiers, deaerators, etc.).

To overcome all the above-mentioned drawbacks, a new procedure has been studied for making seats with additional padding preapplied to the covering.

The aim of the new procedure is to ensure the application of the additional gel padding in the desired quantities, dimensions, thicknesses and positions.

Another aim, particularly for seats, is to position the gel on the vertical sides, on the edges, on the front end.

Another aim of the new procedure is to reduce the production time of each seat.

Another aim is to reduce production waste due to the abnormal behaviour of the gel.

Another aim is to use known machinery without specific modifications or integrations.

Another aim of the new procedure is to avoid the use of special machinery for the production and the distribution of gel during the moulding of the expanded polyurethane foam padding.

These and other direct and complementary aims are achieved by the new procedure for making seats with gel padding, in which the gel is deposited and allowed to set beforehand on the covering in the desired points, after which said covering, complete with the solidified gel, is positioned in the female mould for the moulding of the seat cushion in expanded polyurethane foam.

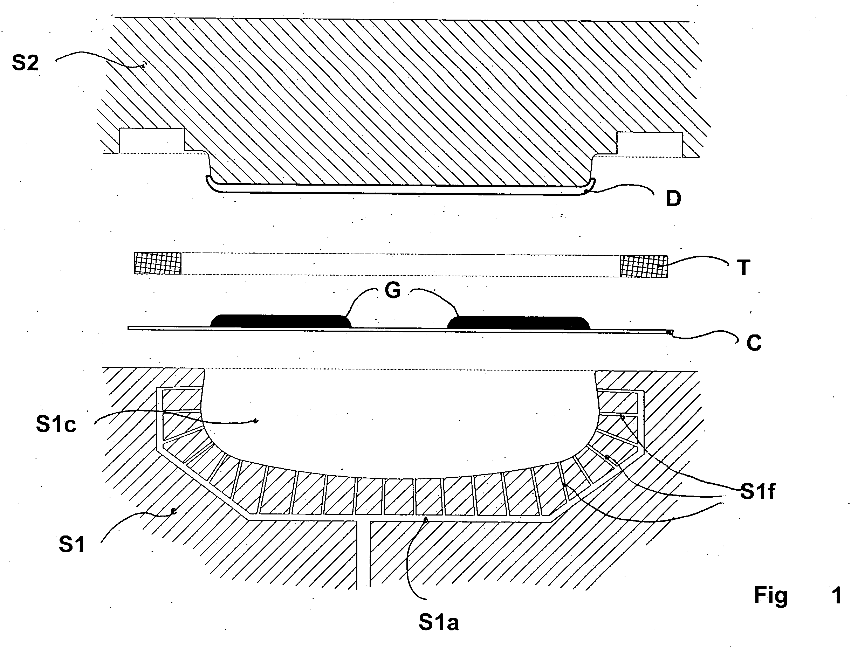

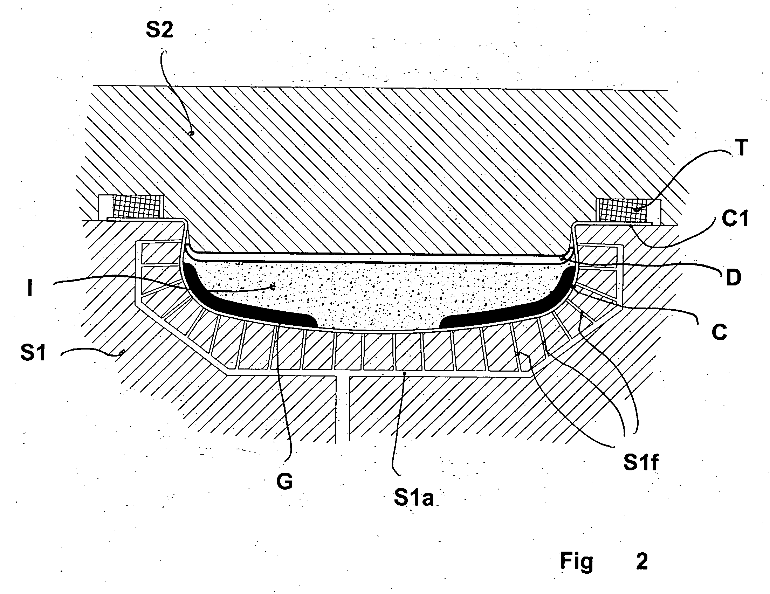

The characteristics of the new procedure for making seats with additional padding preapplied to the covering will be better explained by the following description, with reference to the drawing enclosed purely as an example without limitation.

The new procedure comprises the laying of the additional gel padding (G) on the cover (C).

The gel material (G) that forms the additional padding is deposited on the sheet of leather or plastic material that will form the cover (C).

The sheet of leather or plastic material that will form the cover (C) has larger dimensions than the actual surface necessary to cover the finished seat.

The gel (G) is applied to a surface of the cover (C) in the positions and quantities deemed necessary, for example one or more areas of additional padding, on the vertical side edges, in the centre, longitudinally, with a circular, elliptical, or other desired shape, with a uniform section or thickness profile, or larger in the centre, or on the sides, or differentiated in any way.

The application of the gel (G) on the cover (C) is done beforehand, separately, or anyway outside the process for the production of the padding (I) of the seat cushion and the production and covering of the seats.

The leather or plastic covering (C), integrated with one or more layers of gel (G), can therefore be stored according to the various types and used later, and one type of cover integrated with a layer of gel can be used for several seat models.

The new procedure for making seats with additional gel padding preapplied to the covering comprises the use of a mould in two parts, female on the bottom (S1) and male on the top (S2).

The lower female mould (S1) presents a cavity (S1c) shaped according to the form of the desired seat cushion.

Said lower female mould (S1) is preferably equipped, in its cavity (S1c), with a multitude of micro-holes (S1f) connected to one another and with a duct (S1a) leading to an extraction system.

The upper male mould (S2) is such as to receive and hold the body (D) of the seat and to mate with the lower female mould (S1), so that the body (D) closes the cavity (S1c) of the lower female mould (S1).

This mould is suited to cause and facilitate the expansion of the polyurethane foam of the seat cushion.

Between the lower mould (S1) and the upper mould (S2) there is a frame (T) that seals the cover (C) during the extraction phase, having a circular shape such as to surround the opening of the cavity (S1c) of the lower female mould (S1), ensuring the introduction of the polyurethane into said cavity (S1c).

When the mould is open, that is, with the upper male mould (S2) and the sealing frame (T) raised, the cover (C) is placed on the cavity (S1c) of the lower female mould (S1). In particular, said cover (C) is inserted on top of said cavity (S1c), in such a way that the additional gel padding (G) is facing upwards, that is, towards the inside of the seat, and that the protruding part of the cover (C) can be held back on the upper contact surface between the lower female mould (S1) and the frame (T).

The sealing frame (T) is lowered until it adheres and catches the edge of the cover (C).

The cover (C) is thus blocked and the extraction system activated, so that said cover adheres perfectly to the surface of said cavity (S1c).

Successively, a quantity of liquid polyurethane foam is conveyed into the lower female mould (S1), that is, onto the cover (C).

The upper male mould (S2), under which the body (D) has already been applied, is lowered and closed onto the sealing frame (T) and onto the lower female mould (S1).

At this point the polyurethane foam expands and occupies the whole volume inside the two moulds (S1, S2), that is, between the cover (C) and the body (D).

Once the time normally sufficient for the expansion and solidification of the polyurethane foam has elapsed, the two parts of the mould (S1, S2) and the sealing frame (T) are opened and separated and the finished seat is extracted, composed of the body (D), the polyurethane seat cushion (I), the additional gel padding (G) and the cover (C) all joined together.

The excess covering (C1) is trimmed.

The procedure for making seats with additional padding as described above presents considerable advantages.

No specific machinery is necessary for producing the gel (G) and depositing it in the mould.

No time is now necessary for the depositing and solidification of the gel (G).

The additional gel padding (G) can be placed and distributed in different positions, arrangements, quantities, thicknesses, on the whole expanse of the covering (C).

In the case of cycle seats, this gel padding (G) can extend from the central part to the bottom edge of the seat itself, with the advantage of not only providing support for the ischial bones, but also a contact surface for the internal parts of the moving limbs.

Depending on the distribution of the additional gel padding (G) applied to the cover (C), it is possible to obtain, using the same carousel, both seats without padding and different seats with additional padding, without stopping or modifying the equipment of the working stations.

It is possible to use a circular structure with smaller dimensions and to reduce the number of non-operational stations along the perimeter of the circular structure.

Therefore, with reference to the above description and to the enclosed drawing, the following claims are expressed.

## Claims

1. Procedure for making seats with additional gel padding, comprising a mould in two parts, a lower female mould (S1), with a cavity (S1c) having the shape and dimensions of the seat cushion (I), and an upper male mould (S2), a generically circular sealing frame (T) between the two parts (S1, S2) of the mould, the insertion of the seat cover (C) on the lower female mould (S1), the closure of said sealing frame (T) on the edges (C1) of the cover (C) outside the cavity (S1c) of the lower female mould (S1), the extraction of the air between said cover (C) and said cavity (S1c), the application of the body (D) of the seat on the lower side of the upper male mould (S2), the injection of polyurethane foam on the cover (C) inside the lower female mould (S1), the closure of the upper male mould (S2), with the body (D) on the lower side, onto the cover (C) and onto the lower female mould (S1), the expansion of the polyurethane foam to form the seat cushion (I), **characterized in that** said cover (C) has one or more additional gel paddings (G) already formed and set, attached to the cover (C) itself.

2. Seat cover (C) comprising a sheet of leather or plastic material, **characterized in that** it has one or more additional gel paddings (G) applied to one or both sides.

3. Seat cover (C) comprising a sheet of leather or plastic material according to claim 2, **characterized in that** said additional padding (G) has constant thickness.

4. Seat cover (C) comprising a sheet of leather or plastic material according to claim 2, **characterized in that** said additional padding (G) has variable thickness.

5. Seat cover (C) comprising a sheet of leather or plastic material according to claims 3, 4, **characterized in that** said additional padding is distributed on several different areas.

6. Seat cover (C) comprising a sheet of leather or plastic material according to claims 3, 4, 5, **characterized in that** the gel layer is applied to the edges.

7. Seat cover (C) comprising a sheet of leather or plastic material according to claims 3, 4, 5, 6, **characterized in that** the gel layer is applied substantially at a right angle, in the vertical side areas, with respect to the horizontal surface of the seat.

8. Seat cover (C) comprising a sheet of leather or plastic material according to the previous claims, **characterized in that** the gel layer is applied to the whole surface of the seat and on its vertical side edges.

9. Seat cover (C) comprising a sheet of leather or plastic material according to all the previous claims, **characterized in that** said additional padding is included between said sheet of leather or plastic and a further film of plastic material.
